# EUROPÄISCHE PATENTSCHRIFT

(11) **EP 3 078 543 B1**
(45) Veröffentlichungstag und Bekanntmachung des Hinweises auf die Patenterteilung: **27.05.2020**
(21) Anmeldenummer: 16163858.0
(22) Anmeldetag: 05.04.2016
(51) Int. Cl.: B60P 1/38

(54) **FAHRZEUG ZUM TRANSPORT VON SCHÜTT- UND/ODER STÜCKGUT**
VEHICLE FOR THE TRANSPORT OF BULK AND/OR PIECE GOODS
VEHICULE DE TRANSPORT DE MARCHANDISES AU DETAIL ET/OU EN VRAC

(30) Priorität: 09.04.2015 DE 102015004326
(43) Veröffentlichungstag der Anmeldung: 12.10.2016
(73) Patentinhaber: B. Strautmann & Söhne GmbH u. Co. KG, 49196 Bad Laer (DE)
(72) Erfinder: Oelgeschläger, Oliver, 49163 Bohmte (DE)
(74) Vertreter: Dr. Träger & Strautmann PAe PartG mbB

(56) Entgegenhaltungen:
- DE-A1-102011 102 124
- DE-U- 1 874 371
- JP-A- S6 141 638
- US-A- 2 284 853
- US-A- 3 478 905
- US-A- 3 593 864
- US-A- 5 118 244
- US-B1- 6 623 234

## Beschreibung

Die Erfindung betrifft ein Fahrzeug zum Transport von Schütt- und/oder Stückgut, umfassend ein Chassis auf Räder und einen Laderaum, dessen Boden wenigstens durch zwei sich gegenüber liegende Seitenwände, eine Vorderwand und eine bewegliche Heckwand begrenzt ist,
- wobei der Boden durch ein bewegliches, eine Kopftrommel und eine Hecktrommel umschlingendes Endlos-Förderband von einer konstanten Förderlänge gebildet ist,
- wobei das Endlos-Förderband einen Obertrum und einen Untertrum sowie dazwischen liegende, voneinander beabstandete Tragelemente aufweist, welche jeweils quer zu einer Förderrichtung liegend an Längsträgern des Chassis gelagert sind, und
- wobei das Endlos-Förderband in einen Abwurfbereich ausläuft, welcher sich in einem Heckbereich des Fahrzeugs befindet.

Ein Fahrzeug der im Oberbegriff beschriebenen Art ist der US 66 23 234 B1 zu entnehmen. Das Fahrzeug, Trailer genannt, weist ein Endlos-Förderband auf, dessen Obertrum und Untertrum im gespannten Zustand auf der ganzen Länge des Endlos-Förderbandes zueinander parallel verlaufen. Zwischen dem Obertrum und dem Untertrum sind auch mehrere parallel zur Längsausrichtung des Fahrzeugs angeordneten Stützelemente, wie L-Konsolen, geschlossene Profile und Schienen untergebracht, welche die Gesamtkonstruktion des Endlos-Förderbandes und dessen Querschnitt, insbesondere die Höhe vergrößern. Dadurch nimmt das bekannte Endlos-Förderband relativ viel Platz ein und vermindert die Ladungskapazität des Fahrzeugs.

Aus US 3 593 864 A ist ein Anhänger bekannt, der mit einem endlosen Förderband versehen ist, um in dem Anhänger beförderte Materialien automatisch zu entladen. Das Förderband umläuft eine vordere Rolle und eine hintere Rolle, die jeweils auf einer Welle gelagert sind. Der Antrieb der Rollen und damit des Förderbandes kann mittels eines Hydraulikmotors erfolgen.

Eine spezielle Einrichtung zur Zentrierung des Bandlaufes ist nicht vorgesehen.

Es stellt sich demnach die Aufgabe, ein Fahrzeug der eingangs genannten Art zu entwickeln, welches sich durch eine neuartige Bodengruppe auszeichnet, deren Endlos-Förderband gewichtsoptimiert ist. weniger Platz einnimmt und einen dauerhaft funktionssicheren Umlauf des Förderbandes gewährleistet.

Diese Aufgabe ist durch ein gattungsgemäßes Fahrzeug mit den Merkmalen des Anspruchs 1 gelöst.

Bei dem erfindungsgemäßen Fahrzeug stützt sich der Untertrum auf zwei Andrückrollen ab, welche zwischen der Kopftrommel und der Hecktrommel angeordnet sind und den Untertrum derart anspannen, dass zwischen dem Obertrum und Untertrum ein sich zwischen den Andrückrollen erstreckender Abstand gebildet ist, dessen Größe einen Durchmesser der Kopftrommel und/oder einen Durchmesser der Hecktrommel unterschreitet.

Der Abstand zwischen dem Obertrum und Untertrum ist somit reduziert, also kleiner, beispielsweise halb so groß, wie der besagte Durchmesser der Kopf- oder Hecktrommel.

Die Andrückrollen weisen einen Durchmesser auf, der kleiner, bevorzugt 3 bis 6 mal kleiner, als der Durchmesser der Kopftrommel und/oder der Durchmesser der Hecktrommel ist. Die Andrückrollen erfordern so nur einen relativ geringen Bauraum, können das Endlos-Förderband aber trotzdem widerstandsarm umlenken. Dadurch, dass die Mittelachsen von Kopf- und Hecktrommel sowie die Mittelachsen der kleineren Andrückrollen in etwa in einer Ebene liegen vergrößert sich zudem der Umschlingungswinkel des Endlos-Förderbandes an Kopf- und Hecktrommel auf mehr als 180°. Die Kontaktfläche von Endlos-Förderband und Trommeln vergrößert sich hierdurch. Da wenigstens eine der beiden Trommeln einen Antrieb aufweist und diesen Antrieb auf das Endlos-Förderband überträgt, reduziert sich durch den vergrößerten Umschlingungswinkel auch die Gefahr von Schlupf, wobei unter Schlupf unterschiedliche Geschwindigkeiten zwischen den miteinander in Reibkontakt stehenden mechanischen Elemente, nämlich Trommel und Förderband, verstanden wird.

Trotz der stark minimierten Bauhöhe des Endlos-Förderbandes ist der Abstand jedoch ausreichend groß, um in den Raum zwischen dem Obertrum und Untertrum Tragelemente unterzubringen, die den Obertrum abstützen und letztlich die auf dem Obertrum lagernde Ladung tragen. Damit der Obertrum weitgehend straff gehalten wird und zwischen den Tragelementen nur wenig einsinkt, sind unterhalb des Obertrums eine Vielzahl von gering beabstandeten Tragelementen vorgesehen. Besonders bevorzugt als Tragelemente sind drehbar gelagerte Tragrollen, da diese eine widerstandsarme Bewegung des Obertrums gewährleisten.

Zwischen Obertrum und Untertrum ist vorzugsweise weiterhin wenigstens ein, vorzugsweise angetriebenes, Reinigungselement angeordnet.

Das Reinigungselement kann drehbar, insbesondere schneckenartig sein. Vorzugsweise weist das schneckenartige Reinigungselement zwei gegenläufig angeordnete Windungen auf, mit denen der in den Bereich zwischen dem Obertrum und Untertrum gelangte Schmutz in einfacher Weise über die an Längsträgern befindlichen Öffnungen auf die Seiten abgeführt werden kann. Vorzugsweise ist das Reinigungselement als Rollenbürste, gegebenenfalls mit Windungen, ausgeführt.

Die Längsträger des Chassis sind über wenigstens einen Querträger miteinander verbunden, an welchem wenigstens eine Stützrolle vorzugsweise abnehmbar angebracht ist. Die Stützrollen können einstückig oder geteilt sein. Um die Durchbiegung der Trag- oder Stützrollen zu reduzieren, sind sie vorzugsweise zweigeteilt und an der Trennstelle zusätzlich gelagert. An den Stützrollen kann sich der Untertrum - zwischen den Andrückrollen - abstützen und mit wenig Reibungskraft bewegen.

Der Durchmesser der Kopf- und Hecktrommel ist relativ groß, deshalb ist Umlenkung einfacher und bewirkt weniger Walkbewegung des Endlos-Förderbandes und eine bessere Krafteinleitung.

Das Reinigungselement kann über einen Riemen- oder Kettenantrieb von einem an der Kopftrommel oder Hecktrommel gelagerten Antriebs- bzw. Zahnrad angetrieben sein.

Kopftrommel und/oder Hecktrommel sind vorzugsweise in Form eines Blechrohres ausgeführt und weisen eine Mantelfläche auf, die mit einer Gummi- oder Kunststoffschicht umgeben ist. Die Gummi- oder Kunststoffschicht verbessert den Reibschluss zum Endlos-Förderband.

Erfindungsgemäß ist die Oberfläche der Kopf- und/oder der Hecktrommel mit einer V-förmigen Profilierung versehen, wobei die Spitze des V in der Mitte der Heck- und/oder Kopftrommel angeordnet ist und in Drehrichtung (S) weist. Durch die V-förmige Profilierung wird das Endlos-Förderband bei sich drehender Heck- und Kopftrommel zentriert. Das mittig zentrierte Förderband wird so weitgehend reibunsgsfrei an den Längsträgern des Fahrzeugrahmens vorbeigeführt, wodurch sich Kraftbedarf und Verschleiß reduzieren.

Weitere Vorteile und Merkmale der Erfindung sind in einem Ausführungsbeispiel der Erfindung anhand der Zeichnung näher erläutert. Die Figuren zeigen:
- Fig. 1: ein Fahrzeug gemäß Erfindung in einer schematischen Seitenansicht;
- Fig. 2: ein Chassis ohne Räder, in einer perspektivischen Ansicht;
- Fig. 3: ein Endlos-Förderband, in einer perspektivischen Ansicht;
- Figuren 4 und 5: das Chassis gemäß Fig. 2 mit eingebautem Endlos-Förderband gemäß Fig. 3, jeweils in einer perspektivischen Ansicht;
- Fig. 6: das Fahrzeug gemäß Fig. 1 mit sichtbarem Laderaum, in einer perspektivischen Ansicht;
- Fig. 7: ein Reinigungselement mit einer Kopftrommel und Kettenantrieb, in einer Draufsicht;
- Fig. 8: den Kettenantrieb in einer Seitenansicht auf die Kopftrommel;
- Fig. 9: Anordnung des Kettenantriebes am Chassis, in einer perspektivischen Ansicht;
- Fig. 10: die Hecktrommel in einer frontalen Ansicht;
- Fig. 11: die Hecktrommel gemäß Fig. 10 in einer Seitenansicht;
- Fig. 12: die Hecktrommel gemäß Fig. 10 in einer perspektivischen Darstellung.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

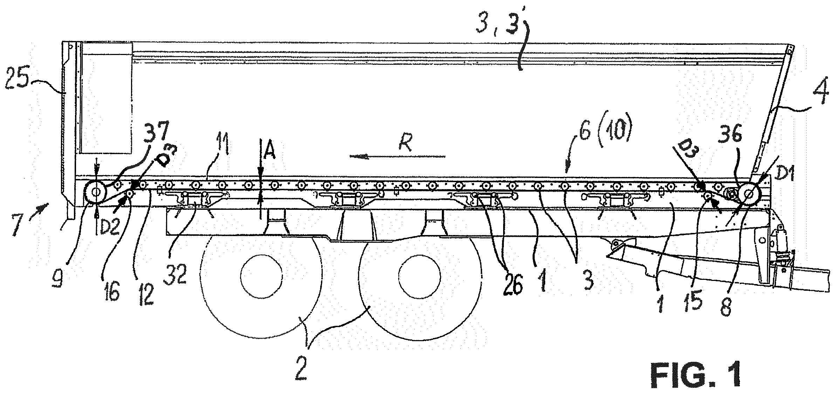

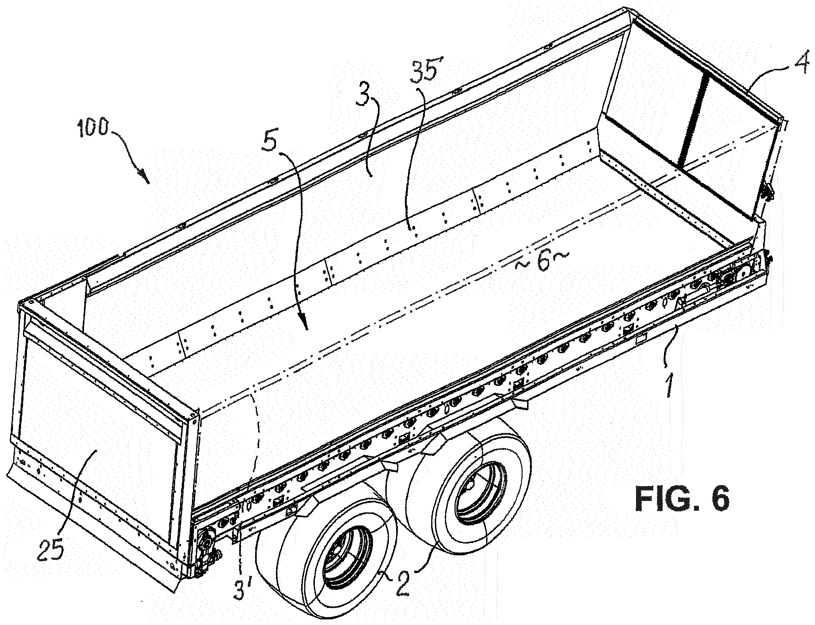

In den Figuren 1 und 6 ist ein als Anhänger dargestelltes, landwirtschaftliches Fahrzeug 100 abgebildet, welches ein Chassis 1 auf Räder 2 und einen durch einen Boden 6, zwei Seitenwände 3, 3', eine Vorderwand 4 und eine Heckwand 25 begrenzten Laderaum 5 umfasst. Die Heckwand 25 (Heckklappe) ist beweglich und lässt sich hydraulisch verschwenken.

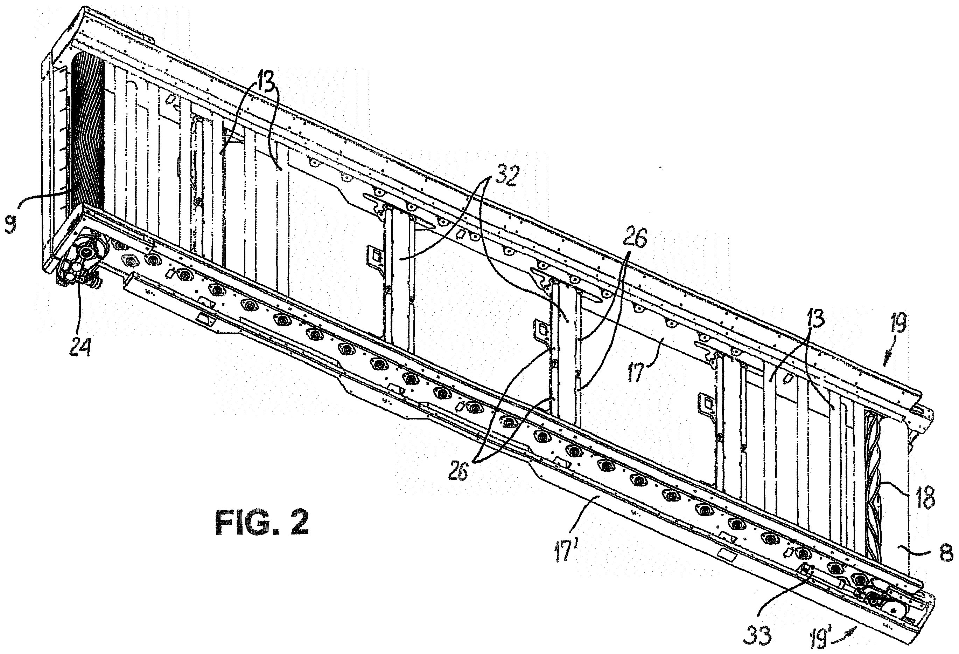

Das Chassis 1 weist zwei parallel zueinander verlaufende Längsträger 17, 17' und mehrere, senkrecht zur Längsausrichtung des Chassis 1 angeordnete Querträger 32 (vgl. Fig. 2) auf, an welchen paarweise zweitgeteilte Stützrollen 26 angebracht sind. Die Stützrollen 26 sind im dargestellten Ausführungsbeispiel abnehmbar.

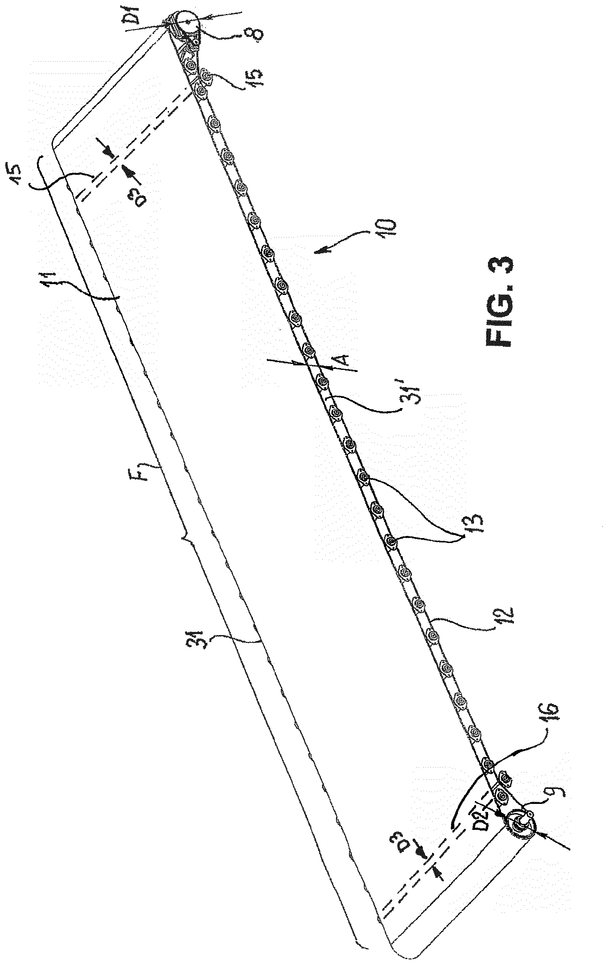

Die Funktion des Bodens 6 übernimmt ein bewegliches, eine Kopftrommel 8 und eine Hecktrommel 9 umschlingendes Endlos-Förderband 10 (vgl. Fig.3) von einer konstanten Förderlänge F, welches den herkömmlichen plattenförmigen Boden ersetzt. Mit Bezugszahlen 31, 31' sind Seitenkanten des Endlos-Förderbandes 10 bezeichnet. Angetrieben wird das Endlos-Förderband 10 von einem mit "24" bezeichneten Antrieb (vgl. Fig. 2) an der Hecktrommel 9. Der Antrieb 24 des Endlos-Förderbandes 10 ist reversibel.

Das Endlos-Förderband 10 ist ein Fördergurt, bestehend aus mit Textilgewebe verstärktem, glattem Gummimaterial. Im dargestellten Ausführungsbeispiel ist das Gummimaterial glatt und weist keinerlei Reibungsstruktur auf. Selbstverständlich ist es möglich, das Gummimaterial mit einer reibungserhöhenden Oberflächenstruktur zu versehen. Wie die Fig. 1 zeigt, läuft das Endlos-Förderband 10 in einen Abwurfbereich 14 aus, welcher in einem Heckbereich 7 des Fahrzeugs 100 angeordnet ist.

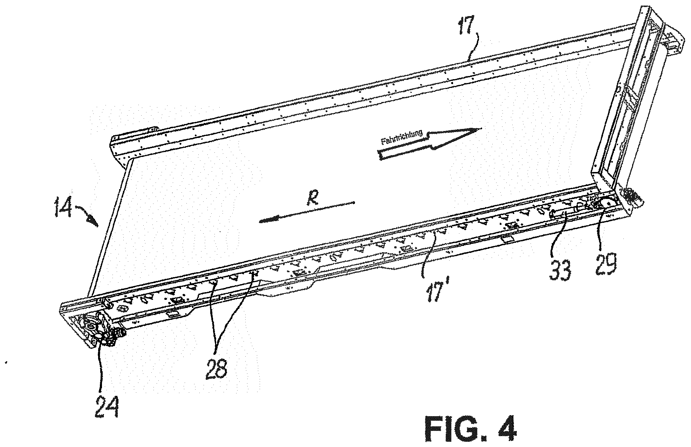

Ferner ist in Figuren 4 bis 6 eine schräg gegenüber dem Boden 6 liegende Dichtungsleiste 35 (in Figuren nur eine, linke Dichtungsleiste) gezeigt, welche die Seitenkanten 31, 31' des Endlos-Förderbandes 10 abdeckt.

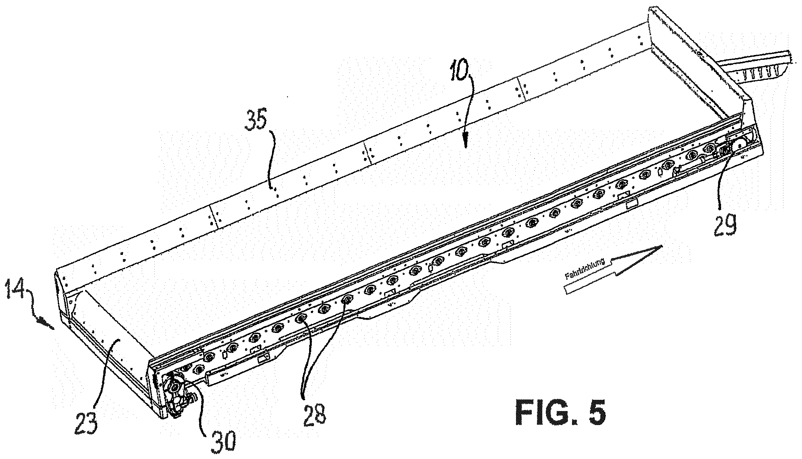

Das Endlos-Förderband 10 weist einen Obertrum 11 und einen Untertrum 12 und mehrere dazwischen liegende, an Längsträgern 17, 17' des Chassis 1 gelagerte, demontierbare Tragelemente 13 (vgl. Fig. 3) auf. Die Demontage der Tragelemente 13 ermöglichen Öffnungen 28 (vgl. Figuren 2, 4 und 5), welche zueinander spiegelsymmetrisch liegend an beiden Längsträgern 17, 17' eingebracht sind. An den Längsträgern 17, 17' sind auch Öffnungen 29, 30 (vgl. Figuren 4 und 5) zur Demontage der Kopftrommel 8 und entsprechend Hecktrommel 9 angeordnet.

Von Vorteil ist, dass sich der Untertrum 12 an zwei Andrückrollen 15,16 abstützt (vgl. Figuren 1 und 3), welche zwischen der Kopftrommel 8 und Hecktrommel 9 angeordnet sind. Die Andrückrollen 15,16 liegen nah der Kopf- und Hecktrommel 8, 9 und dadurch spannen den Untertrum 12 derart an, dass zwischen dem Obertrum 11 und Untertrum 12 ein sich zwischen den Andrückrollen 15, 16 erstreckender Abstand A gebildet ist.

Aus den Figuren 1 und 3 ist ersichtlich, dass der Abstand A kleiner, im vorliegenden Fall etwa 2mal kleiner als ein Durchmesser D1 der Kopftrommel 8 bzw. ein Durchmesser D2 der Hecktrommel 9 ist. Außerdem stützt sich der Untertrum 12 (zwischen den Andrückrollen 15,16) an den zweitgeteilten Stützrollen 26 ab. Auch die Andrückrolle 15, 16 weist einen Durchmesser D3 auf, welcher ebenso kleiner, im vorliegenden Fall 4mal kleiner als der Durchmesser D1, D2 der Kopf- und Hecktrommel 8; 9 ist.

Vorteilhaft ist, dass im Abwurfbereich 14 ein mit dem Endlos-Förderband 10 kontaktierender Abstreifer 23 angeordnet ist, welcher dafür sorgt, dass die an der Oberfläche des Fördergurtes anhaftenden Schüttpartikeln nicht unter den Untertrum 12 gelangen.

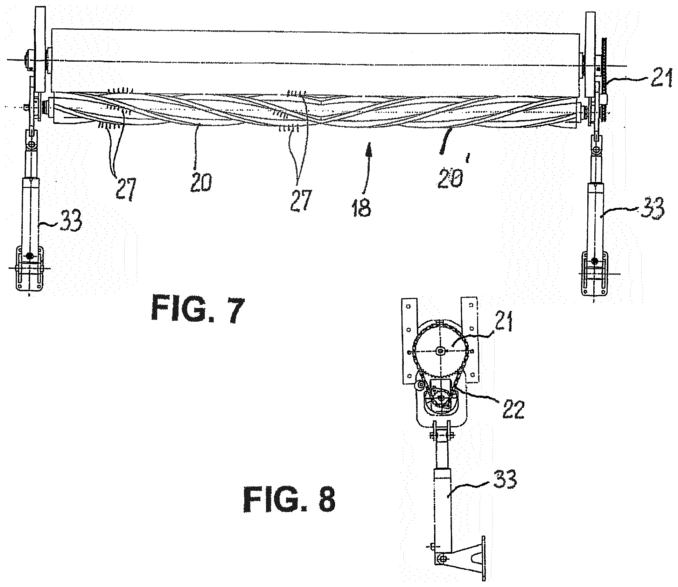

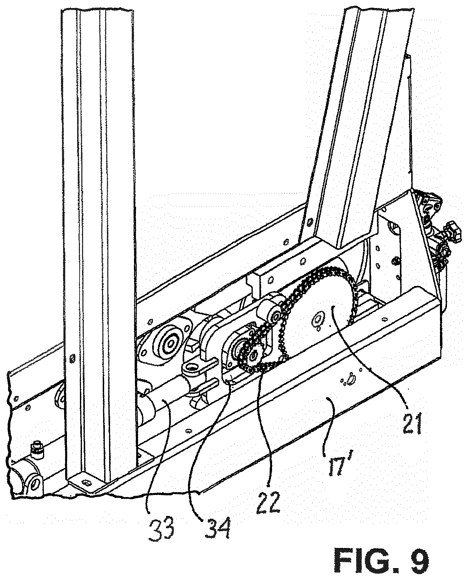

Die Figuren 2 und 7 zeigen ein drehbares, an den Längsträgern 17, 17' gelagertes Reinigungselement 18, welches unterhalb des Obertrums 11 liegt. Seine Aufgabe ist, den sich zwischen Obertrum 11 und Untertrum 12 sammelnden Schmutz, wie Schüttpartikeln, auf Seiten 19, 19' des Chassis 1 außerhalb der Längsträger 17, 17' abzuführen. Zu diesem Zweck hat sich eine schneckenförmige Ausführung des Reinigungselementes 18 als sehr vorteilhaft erwiesen. Insbesondere vorteilhaft ist, wenn das schneckenförmige Reinigungselement 18 zwei gegenläufig angeordnete Windungen 20, 20' aufweist, mit welchen der Schmutz zugleich auf beide Seiten 19, 19'außerhalb der Längsträger 17, 17' über Freiräume 34 (vgl. Fig. 9) entfernt werden kann.

Das Reinigungselement 18 kann aus beliebigem Material, beispielsweise aus Gummi oder Kunststoff, bevorzugt in Form einer Rollenbürste gefertigt sein. In Fig. 7 sind Reinigungsborsten 27 skizzenhaft dargestellt, welche dem Schneckenverlauf folgend auf der ganzen Länge des Reinigungselementes 18 angeordnet sind.

Das Reinigungselement 18 ist über einen Kettenantrieb 22 von einem an der Kopftrommel 8 gelagerten Zahnrad 21 (vgl. Fig. 9) angetrieben. Die Kopftrommel 8 selbst hat keinen eigenen Antriebsmotor. Sie wird einfach von dem Fördergurt in Drehung versetzt.

Mit Hilfe einer in Figuren 2 und 9 angedeuteten Spannvorrichtung 33 kann die Anspannung des Endlos-Förderbandes 10 fein reguliert werden. Die Spannvorrichtung 33 ist ein Hydraulikzylinder, mit dem die Lage der Kopftrommel 8 und damit auch des Reinigungselementes 18 nachjustiert werden kann.

Vom Vorteil ist, dass alle beweglichen Teile, wie Kopftrommel 8, Hecktrommel 9, Tragelemente 13, Reinigungselement 18 und Endlos-Förderband 10 demontierbar und wieder einsetzbar sind.

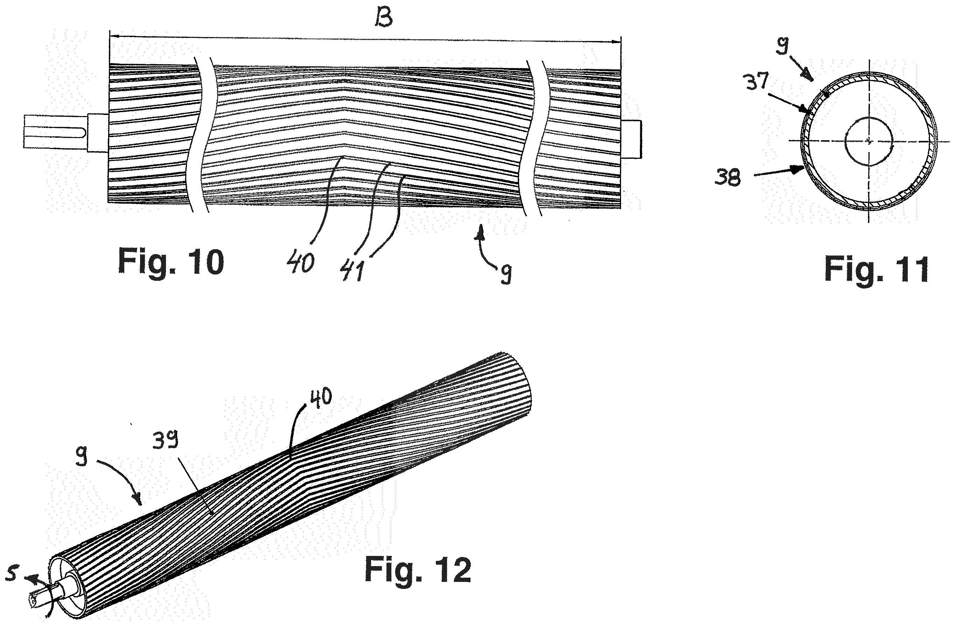

Die Figuren 10 bis 12 zeigen die Hecktrommel 9. Hecktrommel 9 und Kopftrommel 8 weisen vorzugsweise eine gleiche Breite B auf. Im dargestellten Ausführungsbeispiel ist die Hecktrommel 9 aus einem Blechrohr gefertigt und weist eine äußere Mantelfläche 37 auf, auf die eine Kunststoffschicht 38 aufvulkanisiert ist. In die Kunststoffschicht 38 sind Nuten 41 eingebracht, die in der Mitte der Trommel 9 V-förmig in Spitzen 40 zusammenlaufen. Die Spitzen 40 weisen in Drehrichtung S der Hecktrommel 9 und damit in Förderrichtung R. Die Nuten 40 bilden eine das Endlos-Förderband 10 zentrierende Profilierung 39 aus. Anstelle der V-förmigen Profilierung 39 kann auch eine andere zentrierende Profilierung, beispielweise in Form nicht dargestellter bogenförmiger Nuten, vorgesehen sein.

Mit dem Fahrzeug 100 kann unterschiedliches Ladegut, wie landwirtschaftliche Erzeugnisse, Bauschutt und Stückgut transportiert und in einfacher Weise entladen werden.

### Bezugszeichenliste:

- 1: Chassis
- 2: Rad
- 3,3': Seitenwand
- 4: Vorderwand
- 5: Laderaum
- 6: Boden
- 7: Heckbereich
- 8: Kopftrommel
- 9: Hecktrommel
- 10: Endlos-Förderband
- 11: Obertrum
- 12: Untertrum
- 13: Tragelement (Tragrolle)
- 14: Abwurfbereich
- 15: Andruckrolle
- 16: Andruckrolle
- 17: Längsträger (v. 1)
- 18: Reinigungselement
- 19, 19: Seite
- 20, 20': Windung
- 21: Zahnrad
- 22: Kettenantrieb
- 23: Abstreifer
- 24: Antrieb (v. 9)
- 25: Heckwand (Heckklappe)
- 26: Stützrolle
- 27: Reinigungsborsten
- 28: Öffnung (zur Demontage der Tragelemente 13)
- 29: Öffnung (zur Demontage der Kopftrommel 8)
- 30: Öffnung (zur Demontage der Hecktrommel 9)
- 31, 31': Seitenkante (des Endlos-Förderbands 10)
- 32: Querträger
- 33: Spannvorrichtung
- 34: Freiraum
- 35: Dichtungsleiste
- 36: Mantelfläche (Kopftrommel)
- 37: Mantelfläche (Hecktrommel)
- 38: Kunststoffschicht
- 39: Profilierung
- 40: Spitze
- 41: Nut

- 100: Fahrzeug

- A: Abstand
- B: Breite
- D1: Durchmesser
- D2: Durchmesser
- D3: Durchmesser
- F: Förderlänge
- R: Förderrichtung
- S: Drehrichtung

## Patentansprüche

1. Fahrzeug (100) zum Transport von Schütt- und/oder Stückgut, umfassend ein Chassis (1) auf Räder (2) und einen Laderaum (5), dessen Boden (6) wenigstens durch zwei sich gegenüber liegende Seitenwände (3, 3'), eine Vorderwand (4) und eine bewegliche Heckwand (25) begrenzt ist,
- wobei der Boden (6) durch ein bewegliches, eine Kopftrommel (8) und eine Hecktrommel (9) umschlingendes Endlos-Förderband (10) von einer konstanten Förderlänge (F) gebildet ist,
- wobei das Endlos-Förderband (10) einen Obertrum (11) und einen Untertrum (12) und dazwischen liegende, voneinander beabstandete Tragelemente (13) aufweist, welche jeweils quer zu einer Förderrichtung (R) liegend an Längsträgern (17, 17') des Chassis (1) gelagert sind, und
- wobei das Endlos-Förderband (10) in einen Abwurfbereich (14) ausläuft, welcher sich in einem Heckbereich (7) des Fahrzeugs (100) befindet, und
**dadurch gekennzeichnet, dass**
- der Untertrum (12) sich auf zwei Andrückrollen (15, 16) abstützt, welche zwischen der Kopftrommel (8) und der Hecktrommel (9) angeordnet sind und den Untertrum (12) derart anspannen, dass zwischen dem Obertrum (11) und dem Untertrum (12) ein sich zwischen den Andrückrollen (15, 16) erstreckender Abstand (A) gebildet ist, dessen Größe einen Durchmesser (D1) der Kopftrommel (8) und/oder einen Durchmesser (D2) der Hecktrommel (9) unterschreitet und
- die Hecktrommel (8) und/oder die Kopftrommel (9) mit einer V-förmigen Profilierung (39) versehen ist, wobei die Spitze (40) der V-förmigen Profilierung (39) in der Mitte der der Heck- oder Kopftrommel (8, 9) angeordnet ist und in Drehrichtung (S) weist, so dass das Endlos-Förderband (10) bei sich drehender Heck- und Kopftrommel (8, 9) durch die Profilierung (39) zentriert wird.

2. Fahrzeug (100) nach Anspruch 1, **dadurch gekennzeichnet, dass** unterhalb des Obertrums (11) wenigstens ein drehbares, an den Längsträgern (17, 17') gelagertes Reinigungselement (18) angeordnet ist, welches in den Bereich zwischen Obertrum (11) und Untertrum (12) gelangte Schmutz- oder sonstige Partikel sammelt und auf wenigstens eine Seite (19, 19') des Chassis (1) außerhalb der Längsträgern (17, 17') abführt.

3. Fahrzeug (100) nach einem der Ansprüche 1 oder 2, **dadurch gekennzeichnet, dass** die Andrückrollen (15, 16) jeweils einen Durchmesser (D3) aufweisen, welcher kleiner ist als der Durchmesser (D1) der Kopftrommel (8) und/oder der Durchmesser (D2) der Hecktrommel (9).

4. Fahrzeug (100) nach einem der Ansprüche 1 bis 3, **dadurch gekennzeichnet, dass** die Längsträger (17, 17') des Chassis (1) mit wenigstens einem Querträger (32) miteinander verbunden sind, an welchem wenigstens eine Stützrolle (26) angebracht ist.

5. Fahrzeug (100) nach einem der Ansprüche 1 bis 4, **dadurch gekennzeichnet, dass** das Reinigungselement (18) Reinigungsborsten (27) umfasst.

6. Fahrzeug (100) nach einem der Ansprüche 1 bis 5, **dadurch gekennzeichnet, dass** das Reinigungselement (18) schneckenartig ist.

7. Fahrzeug (100) nach einem der Ansprüche 1 bis 6, **dadurch gekennzeichnet, dass** das Reinigungselement (18) zwei gegenläufig angeordnete Windungen (20, 20') aufweist.

8. Fahrzeug (100) nach einem der Ansprüche 1 bis 7, **dadurch gekennzeichnet, dass** das Reinigungselement (18) über einen Kettenantrieb (22) von einem an der Kopftrommel (8) oder Hecktrommel (9) gelagerten Zahnrad (21) angetrieben ist.

9. Fahrzeug (100) nach einem der Ansprüche 1 bis 8, **dadurch gekennzeichnet, dass** das Chassis (1) Querträger (32) umfasst, an welchen Tragelemente (26) angeordnet sind, welche den Untertrum (12) abstützen.

10. Fahrzeug (100) nach einem der Ansprüche 1 bis 9, **dadurch gekennzeichnet, dass** die Kopftrommel (8) eine Mantelfläche (36) und/oder die Hecktrommel (9) eine Mantelfläche (37) aufweist, die mit einer Gummi- oder Kunststoffschicht (38) umgeben ist.

11. Fahrzeug (100) nach einem der Ansprüche 1 bis 10, **dadurch gekennzeichnet, dass** im Abwurfbereich (14) wenigstens ein mit dem Endlos-Förderband (10) kontaktierender Abstreifer (23) angeordnet ist.

12. Fahrzeug (100) nach einem der Ansprüche 1 bis 11, **dadurch gekennzeichnet, dass** das Endlos-Förderband (10) aus mit Textil- oder Metallgewebe verstärktem Gummimaterial besteht.

13. Fahrzeug (100) nach einem der Ansprüche 1 bis 12, **dadurch gekennzeichnet, dass** alle beweglichen Teile, wie Kopftrommel (8), Hecktrommel (9), Tragelemente (13), Reinigungselement (18) und Endlos-Förderband (10) demontierbar und wieder einsetzbar sind.

14. Fahrzeug (100) nach einem der Ansprüche 1 bis 13, **dadurch gekennzeichnet, dass** die Längsträger (17, 17') Öffnungen (28, 29, 30) umfassen, deren Öffnungsweite einen Freiraum bildet, durch welchen die zwischen Obertrum (11) und Untertrum (12) angeordneten Bauteile (8, 9, 13, 18) zu einer Seite (31, 31') des Endlos-Förderbands (10) aus dem Chassis (1) demontierbar sind.

## Claims

1. A vehicle (100) for transporting bulk and/or piece goods, comprising a chassis (1) on wheels (2) and a loading space (5) whose floor (6) is delimited at least by two opposing side walls (3, 3'), a front wall (4) and a movable rear wall (25),
- wherein the floor (6) is formed by a movable endless conveyor belt (10) of a constant conveying length (F) which loops around a head drum (8) and a tail drum (9),
- wherein the endless conveyor belt (10) has an upper run (11) and a lower run (12) as well as spaced-apart bearing elements (13) located therebetween which are each mounted on longitudinal members (17, 17') of the chassis (1) and lie transversely to a conveying direction (R), and
- wherein the endless conveyor belt (10) runs out into a discharge area (14), which is located in a rear area (7) of the vehicle (100), and
**characterized in that**
- the lower run (12) is supported on two pressure rollers (15, 16) which are arranged between the head drum (8) and the rear drum (9) and tension the lower run (12) in such a way that a distance (A) extending between the pressure rollers (15, 16) is formed between the upper run (11) and the lower run (12), the size of which distance (A) is less than a diameter (D1) of the head drum (8) and/or a diameter (D2) of the rear drum (9) und
- the rear drum (9) and/or the head drum (8) is provided with a V-shaped profiling (39), wherein the tip (40) of the V-shaped profiling (39) is arranged at the midpoint of that of the rear or head drum (8, 9) and points in the direction of rotation (S), so that the endless conveyor belt (10) is centred by the profiling (39) when the rear and head drum (8, 9) rotate.

2. The vehicle (100) as claimed in claim 1, **characterized in that** at least one rotatable cleaning element (18) mounted on the longitudinal members (17, 17') is arranged underneath the upper run (11), which cleaning element (18) collects dirt or other particles which have entered the region between the upper run (11) and the lower run (12) and discharges them onto at least one side (19, 19') of the chassis (1) outside the longitudinal members (17, 17').

3. The vehicle (100) as claimed in claim 1 or 2, **characterized in that** the pressure rollers (15, 16) each have a diameter (D3) that is smaller than the diameter (D1) of the head drum (8) and/or the diameter (D2) of the rear drum (9).

4. The vehicle (100) as claimed in one of the claims 1 to 3, **characterized in that** the longitudinal members (17, 17') of the chassis (1) are connected to each other by at least one cross member (32) onto which at least one support roller (26) is attached.

5. The vehicle (100) as claimed in one of the claims 1 to 4, **characterized in that** the cleaning element (18) comprises cleaning bristles (27).

6. The vehicle (100) as claimed in one of the claims 1 to 5, **characterized in that** the cleaning element (18) is configured like an auger.

7. The vehicle (100) as claimed in one of the claims 1 to 6, **characterized in that** the cleaning element (18) has two windings (20, 20') arranged in opposite directions.

8. The vehicle (100) as claimed in one of the claims 1 to 7, **characterized in that** the cleaning element (18) is driven via a chain drive (22) by a toothed wheel (21) mounted on the head drum (8) or rear drum (9).

9. The vehicle (100) as claimed in one of the claims 1 to 8, **characterized in that** the chassis (1) comprises cross members (32) on which supporting elements (26) are arranged which support the lower run (12).

10. The vehicle (100) as claimed in one of the claims 1 to 9, **characterized in that** the head drum (8) has a shell surface (36) and/or the rear drum (9) has a shell surface (37) which is surrounded by a rubber or plastic layer (38).

11. The vehicle (100) as claimed in one of the claims 1 to 10, **characterized in that** at least one scraper (23) contacting the endless conveyor belt (10) is arranged in the discharge area (14).

12. The vehicle (100) as claimed in one of the claims 1 to 11, **characterized in that** the endless conveyor belt comprises rubber material reinforced with textile or metal fabric.

13. The vehicle (100) as claimed in one of the claims 1 to 12, **characterized in that** all moving parts, such as head drum (8), rear drum (9), supporting elements (13), cleaning element (18) and endless conveyor belt (10) can be dismounted and reinstalled.

14. The vehicle (100) as claimed in one of the claims 1 to 13, **characterized in that in that** the longitudinal members (17, 17') have openings (28, 29, 30) whose opening width forms a free space through which the components (8, 9, 13, 18) arranged between upper run (11) and lower run (12) can be removed from the chassis (1) to one side (31, 31') of the endless conveyor belt (10).

## Revendications

1. Véhicule (100) de transport de marchandise en vrac et/ou au détail, comprenant un châssis (1) sur des roues (2) et un espace de chargement (5) dont le fond (6) est délimité par au moins deux parois latérales (3, 3') opposées, une paroi avant (4) et une paroi arrière (25) mobile;
- le fond (6) étant formé par un tapis sans fin (10) mobile entourant un tambour de tête (8) et un tambour arrière (9) et dont la longueur de transport (F) est constante ;
- le tapis sans fin (10) comportant un brin supérieur (11) et un brin inférieur (12) et des éléments de support (13) reposant entre, lesdits éléments étant placés à une certaine distance les uns des autres et étant disposés respectivement transversalement à une direction de transport (R) de façon à reposer contre les supports longitudinaux (17, 17') du châssis (1) ; et
- le tapis sans fin (10) circulant dans une zone d'éjection (14) se trouvant dans une zone arrière (7) du véhicule (100) ; et
**caractérisé en ce que:**
- le brin inférieur (12) s'appuie sur deux rouleaux compresseurs (15, 16) qui sont disposés entre le tambour de tête (8) et le tambour arrière (9) et comprimant le brin inférieur (12) s'étendant entre les rouleaux compresseurs (15, 16) de telle sorte qu'une distance (A) soit formée entre le brin supérieur (11) et le brin inférieur (12), l'ordre de grandeur de ladite distance étant inférieur à un diamètre (D1) du tambour de tête (8) et/ou à un diamètre (D2) du tambour arrière (9) ; et
- le tambour arrière (8) et/ou le tambour de tête (9) étant pourvu d'un profilage (39) en forme de V, la pointe (40) du profilage (39) en forme de V étant disposée au centre du tambour de tête ou du tambour arrière (8, 9) et étant orientée dans la direction de rotation (S), de sorte que le tapis de transport sans fin (10) soit centré par le profilage (39) lorsque le tambour arrière et de tête (8, 9) tourne.

2. Véhicule (100) selon la revendication 1, **caractérisé en ce qu'au** moins un élément de nettoyage (18) pivotable disposé au niveau des supports longitudinaux (17, 17') soit disposé en dessous du brin supérieur (11), ledit élément accumulant les particules de saleté ou autres arrivant dans la zone située entre le brin supérieur (11) et le brin inférieur (12) et les évacuant sur au moins un côté (19, 19') du châssis (1), à l'extérieur des supports longitudinaux (17, 17').

3. Véhicule (100) selon l'une quelconque des revendications 1 ou 2, **caractérisé en ce que** les rouleaux compresseurs (15, 16) comportent respectivement un diamètre (D3) inférieur au diamètre (D1) du tambour de tête (8) et/ou au diamètre (D2) du tambour arrière (9).

4. Véhicule (100) selon l'une quelconque des revendications 1 à 3, **caractérisé en ce que** les supports longitudinaux (17, 17') du châssis (1) sont reliés à au moins un support transversal (32) au niveau duquel au moins un rouleau de soutien (26) est disposé.

5. Véhicule (100) selon l'une quelconque des revendications 1 à 4, **caractérisé en ce que** l'élément de nettoyage (18) comprend des soies de nettoyage (27).

6. Véhicule (100) selon l'une quelconque des revendications 1 à 5, **caractérisé en ce que** l'élément de nettoyage (18) est en forme de vis sans fin.

7. Véhicule (100) selon l'une quelconque des revendications 1 à 6, **caractérisé en ce que** l'élément de nettoyage (18) comporte deux spirales (20, 20') disposées en sens contraire.

8. Véhicule (100) selon l'une quelconque des revendications 1 à 7, **caractérisé en ce que** l'élément de nettoyage (18) est entraîné par une roue dentée (21) disposée au niveau du tambour de tête (8) ou du tambour arrière (9) via un entraînement à chaîne (22).

9. Véhicule (100) selon l'une quelconque des revendications 1 à 8, **caractérisé en ce que** le châssis (1) comprend des supports transversaux (32) au niveau desquels des éléments de support (26) sont disposés, ces éléments supportant le brin inférieur (12).

10. Véhicule (100) selon l'une quelconque des revendications 1 à 9, **caractérisé en ce que** le tambour de tête (8) comporte une surface d'enveloppe (36) et/ou que le tambour arrière (9) comporte une surface d'enveloppe (37) entourée par une couche de caoutchouc ou de matière plastique (38).

11. Véhicule (100) selon l'une quelconque des revendications 1 à 10, **caractérisé en ce qu'au** moins un racloir (23) mis au contact du tapis de transport sans fin (10) est disposé dans la zone d'éjection (14).

12. Véhicule (100) selon l'une quelconque des revendications 1 à 11, **caractérisé en ce que** le tapis de transport sans fin (10) se compose de matière en caoutchouc renforcée de textile ou de tissu métallique.

13. Véhicule (100) selon l'une quelconque des revendications 1 à 12, **caractérisé en ce que** toutes les parties mobiles, telles que le tambour de tête (8), le tambour arrière (9), les éléments de support (13), l'élément de nettoyage (18) et le tapis sans fin (10) sont démontables et réinsérables.

14. Véhicule (100) selon l'une quelconque des revendications 1 à 13, **caractérisé en ce que** les supports longitudinaux (17, 17') comprennent des ouvertures (28, 29, 30) dont la largeur d'ouverture forme un espace libre à travers lequel les composants (8, 9, 13, 18) disposés entre le brin supérieur (11) et le brin inférieur (12) peuvent être démontés du châssis (1) d'un côté (31, 31') du tapis sans fin (10).
